Europäisches Patentamt

European Patent Office

Office européen des brevets

(19)

(11) Veröffentlichungsnummer: **0 111 972**
**B1**

(12) **EUROPÄISCHE PATENTSCHRIFT**

(45) Veröffentlichungstag der Patentschrift:
31.05.89

(21) Anmeldenummer: **83201767.7**

(22) Anmeldetag: **14.12.83**

(51) Int. Cl.⁴: **H 04 Q 7/04**

(54) **Verfahren und Steuereinrichtung zum Auswählen eines Organisationskanals in einer beweglichen Funkstation eines Funkübertragungssystems.**

(30) Priorität: **17.12.82 DE 3246741**

(43) Veröffentlichungstag der Anmeldung:
**27.06.84 Patentblatt 84/26**

(45) Bekanntmachung des Hinweises auf die Patenterteilung:
**31.05.89 Patentblatt 89/22**

(84) Benannte Vertragsstaaten:
**BE DE FR GB SE**

(56) Entgegenhaltungen:
**EP-A-0 036 146**
**DE-A-2 351 563**
**DE-A-2 659 635**
**DE-A-3 130 176**
**DE-A-3 200 965**

**FREQUENZ, Band 36, Ausgabe 4-5, April/Mai 1982, Seiten 90-99, Berlin, DE; F. PERNICE: "Das Funkfernsprechnetz C der Deutschen Bundespost"**

(73) Patentinhaber: **Philips Kommunikations Industrie AG, Thurn- und- Taxis- Strasse 10, D-8500 Nürnberg 10 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **BE FR GB SE**

(72) Erfinder: **Scheinert, Stefan, Dipl.- Ing., Goethestrasse 3, D-8500 Nürnberg (DE)**

(74) Vertreter: **Peuckert, Hermann, Dipl.- Ing., Philips Patentverwaltung GmbH Wendenstrasse 35 Postfach 10 51 49, D-2000 Hamburg 1 (DE)**

EP 0 111 972 B1

**Beschreibung**

Die Erfindung betrifft ein Verfahren und eine Steuereinrichtung zum Auswählen eines Organisationskanals in einer beweglichen Funkstation eines Funkübertragungssystems gemäß den Oberbegriffen der Ansprüche 1 und 20.

Bei einem aus der DE-AS-2 733 503 bekannten Nachrichten-Funksystem (Funkübertragungssystem) ist der Dienstbereich (das gesamte Versorgungsgebiet) in eine Vielzahl von Zonen (Funkzonen) eingeteilt (Zellularsystem) und jeder Funkzone sind mindestens ein Steuerkanal (Organisationskanal) und mehrere Sprechkanäle zugeordnet. In einer Funkzone mit einer großen Anzahl von beweglichen Fernsprechteilnehmern (beweglichen Funkstationen) ist es notwendig, in der beweglichen Funkstation (ortsfeste Funkstation) für mehrere Organisationskanäle je einen Sender/Empfänger vorzusehen. Um den Aufwand für die Sende- und Empfangstrennfilter zu verringern, sind das Sende- und Empfangsfrequenzband in jeweils ein oberes und ein unteres Band aufgeteilt. Die in mindestens zwei Gruppen (Teilmengen) eingeteilten beweglichen Funkstationen benutzen jeweils ein Band des Sende- und Empfangsfrequenzbandes. Die Aufteilung von Sende- und Empfangsfrequenzband in jeweils zwei Bänder ist so gewählt, daß beide Teilmengen von beweglichen Funkstationen ein gemeinsames Band aufweisen. In diesem gemeinsamen Band sind zumindest die Organisationskanäle angeordnet.

Eine bewegliche Funkstation einer ersten Teilmenge wählt z. B. zum Verbindungsaufbau einen Organisationskanal aus. Dazu sucht die bewegliche Funkstation die der Teilmenge zugeordneten Organisationskanäle nach einem Organisationskanal mit gutem Signal/Geräusch-Verhältnis ab. Verschlechtert sich durch Störungen der Funkfeldausbreitung oder durch andere Ursachen das Signal/Geräusch-Verhältnis des ausgewählten Organisationskanals so kann die bewegliche Funkstation, bei Empfang einer bestimmten Markierung eines Organisationskanals, auch einen Organisationskanal einer anderen Teilmenge, z. B. der zweiten Teilmenge, benutzen. Diese Zuordnung von Organisationskanälen einer anderen Teilmenge wird in einer Funkzone dann vorgenommen, wenn diese eine geringe Anzahl von beweglichen Funkstationen aufweist.

Hieraus ergibt sich bei einem Funkübertragungssystem mit vielen Übertragungskanälen, z. B. 1000 Übertragungskanälen, die Notwendigkeit, die Organisationskanäle in ein schmales Frequenzband des Sende- und Empfangsfrequenzbands zu legen. Anderenfalls würde die Suche der beweglichen Funkstationen nach einem Organisationskanal lange dauern.

Wird in einer Funkzone die Anzahl der dieser Funkzone zugehörigen Organisationskanäle oder die Frequenz und damit die Kanalnummer eines Organisationskanals verändert, so sollen die beweglichen Funkstationen selbstständig und automatisch eine Suche nach den dadurch gebildeten neuen Satz von Organisationskanälen durchführen können. Wird beispielsweise bei Ausfall eines Organisationskanals der Funkzone dieser ein neuer Organisationskanal zugeteilt, so soll möglichst verhindert werden, daß die bereits vorhandenen Organisationskanäle sowie der neue Organisationskanal kurzfristig durch eine Vielzahl von einzelnen Umbuchungen von beweglichen Funkstationen momentan überlastet werden.

In EP-A-0 036 146 ist ein mobiles Funknetz mit einer Anzahl Funkkonzentratoren in gegenseitiger räumlicher Anordnung nach Art eines Zellularsystems beschrieben. Bei diesem Funknetz bilden eine fest vorgegebene Anzahl von einander unmittelbar benachbarten Funkzonen eine Funkbereichsgruppe. Einer Funkbereichsgruppe ist mindestens ein Organisationskanal zugeordnet. Dieser ist unter Einsatz einer funknetzweiten Synchronisation als Mehrfachzugriffskanal mit einem periodischen Rahmen gestaltet, der wenigstens eine der Anzahl der Funkzonen einer Funkbereichsgruppe entsprechende Anzahl von Zeitschlitzen umfaßt. Jeder Zeitschlitz ist gleichzeitig solchen Funkzonen mehrerer Funkbereichsgruppen für die Übermittlung funkbereichsbezogener Informationsblöcke zugeordnet, die voneinander funktechnisch ausreichend entkoppelt sind. Ein solcher Organisationskanal beansprucht einen bestimmten Frequenzkanal und ist zeitschlitzweise den einer Funkbereichsgruppe zugehörigen Funkzonen zugeteilt. Bei diesem bekannten System ist vorgeschlagen, zur Ermöglichung einer Kapazitätsausweitung einen oder mehrere weitere Organisationskanäle vorzusehen, wobei jeder dieser Organisationskanäle einen eigenen Frequenzbereich beansprucht und in sich ebenso organisiert ist wie der erste Organisationskanal. Hierdurch wird insbesondere die Gesamtzahl der zur Verfügung stehenden Zeitschlitze vergrößert. Es ist für jeden dieser Organisationskanäle ein gesonderter Frequenzbereich erforderlich, außerdem muß zwischen dem von den Zeitschlitzen der Organisationskanäle gebildeten Rahmen ein zeitlicher Versatz gegeben sein. Eine mobile Funkstation ist darauf eingerichtet, daß in einem solchen Netz nur zum Beispiel zwischen zwei Organisationskanälen gewählt werden kann. Ein Suchen eines geeigneten Organisationskanales unter einer Vielzahl von Organisationskanälen und eine Auswahl nach bestimmten Qualitätskriterien ist nicht vorgesehen. Ein Funkbereich nimmt einen speziellen ihm zur Verfügung stehenden Zeitschlitz erst dann für die Übertragung eines besonderen Informationsblockes in Anspruch, wenn das Verkehrsaufkommen dies erfordert. Mit diesem Informationsblock wird für eine sich anmeldende Teilnehmerstation eine Information übertragen, die dieser mitteilt, daß für die Anmeldung und den weiteren funkorganisatorischen Informationsaustausch der weitere Organisationskanal benutzt werden soll.

Der Erfindung liegt die Aufgabe zugrunde, bei im Frequenzband der Übertragungskanäle beliebig angeordneten Organisationskanälen, ein Verfahren und eine Steuereinrichtung zum Auswählen eines Organisationskanals in der beweglichen Funkstation anzugeben. Diese Aufgabe wird durch die in den Ansprüchen 1 und 20 gekennzeichneten Merkmale gelöst.

Durch das erfindungsgemäße Verfahren kann eine Auswahl eines Organisationskanals, weitgehend unabhängig von der Zahl der im Funkübertragungssystem verwendeten Übertragungskanäle, in der beweglichen Funkstation durchgeführt werden. Bei einem Funkübertragungssystem mit z. B. 1000 Übertragungskanälen überprüft die bewegliche Funkstation im Normalbetrieb z. B. neun Organisationskanäle. Bei Einführung kleiner Funkzonen (Radius 1,5 km) würde eine Überprüfung aller Übertragungskanäle z. B. 1 Minute dauern. Bewegt sich die bewegliche Funkstation mit einer Geschwindigkeit von z. B. 50 km/h im Kleinzellennetz, so ist die Wahrcheinlichkeit groß, daß diese während dieser Überprüfung eine kleine Funkzone bereits wieder verlassen hat. Durch die geringe Anzahl von zu überprüfenden Organisationskanälen kann die Erreichbarkeit der beweglichen Funkstationen verbessert werden.

Weiterhin soll beim ersten Einschalten der beweglichen Funkstation, dieser die Möglichkeit gegeben werden, einen geeigneten Organisationskanal während eines Suchlaufes zu finden. Eine Umkonfiguration im Funkübertragungssystem soll möglich sein. Weiterhin soll sichergestellt sein, daß die bewegliche Funkstation einen Organisationskanal auf jener Frequenz empfängt auf welcher die ortsfeste Funkstation sendet.

Bei einer Lösung gemäß Anspruch 2 oder 4 werden Spiegelfrequenzeffekte durch die Übertragung der Kanalnummer zuverlässig ausgeschlossen. Innerhalb einer Funkzone können mehrere Organisationskanäle verwendet werden. Eine geregelte Verteilung der Verkehrsmenge auf die Organisationskanäle kann mit der von der ortsfesten Funkstation gesendeten Teilmengenmarkierung erreicht werden.

Nach Ausfall eines Organisationskanals sollen sich die beweglichen Funkstationen ohne Ummeldung einen neuen Organisationskanal zuordnen.

Bei einer Lösung gemäß Anspruch 3 ist bei den Organisationskanälen benachbarter Funkzonen kein plötzliches Ansteigen der Verkehrsmenge zu erwarten. Die beweglichen Funkstationen sind auf dem Ersatzkanal innerhalb kürzester Zeit wieder erreichbar.

Die Erfindung wird im folgenden anhand eines Ausführungsbeispiels näher beschrieben und erläutert. Es zeigt:

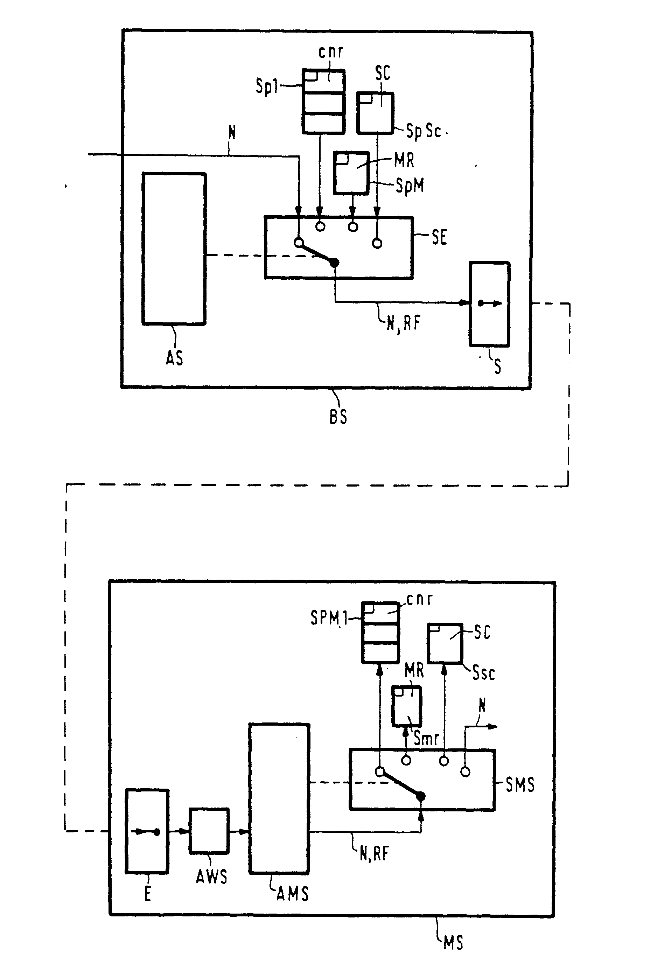

Fig. 1 eine Ausführungsform der Steuereinrichtung gemäß der Erfindung.

Das Funkübertragungssystem ist in mehrere, aufeinander aufbauende Netzebenen gegliedert. Die unterste Ebene wird von sogenannten Funkzonen gebildet. Der Radius solcher Funkzonen liegt in Abhängigkeit von der Höhe der Antennenmasten von ortsfesten Funkstationen BS und bei einer Sendeleistung von maximal 50 Watt zwischen 5 und 15 km. Jede Funkzone wird von einer ortsfesten Funkstation BS versorgt. Diese kann Gespräche über sogenannte Funkvermittlungseinrichtungen vom und zum öffentlichen Fernsprechnetz weiter vermitteln. Mehrere benachbarte Funkzonen können zu einem sogenannten Rufbereich zusammengefaßt werden. Auf der Festseite werden laufend die Aufenthaltsorte aller beweglichen Funkstationen MS erfaßt und in einem sogenannten Adressbuch gespeichert. Wechselt eine bewegliche Funkstation MS den Rufbereich, so erfolgt eine Änderung im Adressbuch.

Ein Gesprächswunsch eines Fernsprechteilnehmers eines öffentlichen Fernsprechnetzes zu einer beweglichen Funkstation MS führt zur Ausstrahlung eines Seletivrufs in allen Funkzonen jenes Rufbereichs, in dem die bewegliche Funkstation MS momentan erfaßt ist.

Das Sende- und Empfangsfrequenzband liegt beispielsweise zwischen 860 bis 960 MHz. Der Duplexabstand zwischen Sende- und Empfangsfrequenzband kann zu 45 MHz gewählt werden und Sende- und Empfangsfrequenzband können in ein Kanalraster von 25 KHz unterteilt werden. Die Kanäle werden im Duplexbetrieb betrieben.

Jeder Funkzone des Funkübertragungssystems sind je nach Verkehrsaufkommen eine Anzahl von Sprechkanälen und jeweils mindestens ein Organisationskanal CCH zugeordnet. Dabei werden in räumlich benachbarten Funkzonen unterschiedliche Frequenzen (Organisationskanäle) verwendet. Zur Unterscheidung von Organisationskanal CCH und Sprechkanal werden diese durch einen speziellen Code gekennzeichnet. Bei Ausfall bzw. Störung eines Organisationskanals CCH kann jeder Sprechkanal durch Wechsel des Codes die Aufgaben des Organisationskanals CCH übernehmen. Auf eine sonst aus Sicherheitsgründen erforderliche Duplizierung von Organisationskanälen CCH kann dadurch verzichtet werden.

Beim bekannten Funkübertragungssystem (DE-AS-2 733 503) sucht eine bewegliche Funkstation nach dem Einschalten mit Hilfe eines Orientierungssuchlaufs jenen Organisationskanal mit dem höchsten Signal/Geräusch-Verhältnis. Die Kanalnummer dieses Organisationskanals wird gespeichert und die bewegliche Funkstation geht in den Ruhezustand. Die bewegliche Funkstation überwacht den Störabstand dieses Organisationskanals. Sinkt der Störabstand des momentan gespeicherten Organisationskanals unter einem vorgebbaren Wert ab, so tastet die bewegliche Funkstation andere Organisationskanäle bei einem Suchlauf ab und vergleicht die Störabstände. Durch diesen Vergleich kann ein Funkzonenwechsel erkannt werden und die bewegliche Funkstation speichert die Kanalnummer des entsprechenden Organisationskanals. In einer Funkzone befinden sich demnach bewegliche Funkstationen, welche sende- und empfangsbereit oder welche momentan über den Organisationskanal CCH einen Verbindungsaufbau über ortsfeste Funkstationen und Funkvermittlungseinrichtungen ins öffentliche Fernsprechnetz oder zu einer beweglichen Funkstation des Funkübertragungssystem durchführen. Beim bekannten Funkübertragungssystem (DE-AS-2 733 503) speichert die bewegliche Funkstation jenen Organisationskanal, der das höchste Signal/Geräuschverhältnis aufweist. Dabei können, je nach Verkehrssituation, die Verkehrsmengen auf verschiedenen Organisationskanälen einer Funkzone unterschiedlich sein.

Im folgenden werden Bedingungen und Funktionsabläufe für die Auswahl eines Organisationskanals CCH durch eine bewegliche Funkstation MS beschrieben.

## 1. Führung eines Netzabbildes

Befindet sich die bewegliche Funkstation MS auf einen Organisationskanal CCH (d.h. dessen Meldungen empfängt) so überprüft diese, ob Verweise RF auf andere bestehende Organisationskanäle CCH oder Verweise SC auf einen der ortsfesten Funkstation BS zugeordneten Ersatzkanal CCH-SC für diese relevant sind. Dazu müssen folgende Bedingungen erfüllt sein:

- Landeskennzahl nat

die angegebene Landeskennzahl nat muß mit der vom Teilnehmer in der beweglichen Funkstation MS eingestellten übereinstimmen.

-Teilmengenmarkierung

die Teilmengenmarkierung atp in einem Organisationskanal CCH gibt an, welche Teilmengen TP von beweglichen Funkstationen MS diesen benutzen dürfen. Die Teilmengen TP ergeben sich aus der Unterteilung der Gesamtmenge der im Funkversorgungsgebiet der ortsfesten Funkstation BS befindlichen, beweglichen Funkstationen MS. Die bewegliche Funkstation MS überprüft, ob die Teilmenge TP zu der diese gehört, auf diesen Organisationskanal CCH erlaubt ist.

Wenn diese Bedingungen erfüllt sind, speichert die bewegliche Funkstation MS den Inhalt der Verweise RF und SC ab.

Die Speicherung der Verweise RF erfolgt so, daß jeweils die letzten M-Verweise erhalten bleiben. Dies hat den Vorteil, daß nur der aktuelle Stand des Netzabbildes festgehalten wird. M kann klein sein, da die bewegliche Funkstation MS für jede ortsfeste Funkstation BS nur einen Verweis RF abspeichert.

Verweise MR, welche den Organisationskanal CCH selbst betreffen, werden von der beweglichen Funkstation MS genauso ausgewertet, wie die Verweise RF, d.h. die Landeskennzahl nat und die Teilmengenmarkierung atp werden ebenfalls überprüft und abgespeichert. Stimmt eine im Verweis MR angegebene Rufzonenmarkierung pga mit der in der beweglichen Funkstation MS abgespeicherten nicht überein, so meldet diese sich um und speichert die neue Rufzonenmarkierung pga ab. Stimmen Landeskennzahl nat oder Teilmengenmarkierung atp der Verweise MR mehrmals nicht überein, so startet die bewegliche Funkstation MS einen kleinen Suchlauf.

Die bewegliche Funkstation MS verbleibt solange auf dem Organisationskanal CCH, bis dessen Qualität nicht mehr ausreichend ist. Das Maß der Qualität einer Funkverbindung kann aus einer Feldstärke- und/oder Jittermessung abgeleitet werden. Die bewegliche Funkstation MS mißt diese und ordnet diese einer Qualitätskategorie zu.

## 2. Organisationskanal-Auswahl

Um zu gewährleisten, daß die bewegliche Funkstation MS jeweils einen Organisationskanal CCH mit ausreichender Qualität empfängt, ist unter bestimmten Bedingungen (Einschalten der beweglichen Funkstation MS, Absinken der Qualität einer bestehenden Funkverbindung zwischen ortsfester Funkstation BS und beweglicher Funkstation MS unter ein Minimum, Umkonfiguration aufgrund von Änderungen der Verweise MR) ein Suchlauf nach einen Organisationskanal CCH in der beweglichen Funkstation MS zu starten.

Die bewegliche Funkstation MS wird mit einen kleinen Suchlauf beginnen. Führt dieser nicht zum Erfolg, so schließt sich ein großer Suchlauf an.

### 2.1 Kleiner Suchlauf

Beim kleinen Suchlauf entnimmt die bewegliche Funkstation MS einem Speicher (Speicherinhalt bleibt auch nach Ausschalten der beweglichen Funkstation MS erhalten) das zuletzt geführte Netzabbild und sucht diese Organisationskanäle CCH wie folgt ab:

Im Speicher seien M-Verweise RF (z. B. acht) und ein Verweis MR gespeichert. Auf all diesen M + 1 Organisationskanälen (M + 1 = 9) wird die Qualität während eines ersten Zeitabschnitts TCCHTR (z. B. 5 ms) gemessen (Feldstärke- und/oder Jittermessung) und eine Punktzahl proportional der Qualität vergeben. Alle Kanäle werden I-mal (z. B. 3) bewertet und anschließend die Punktzahlen gemittelt. Nun wird eine Liste erstellt, wobei der Kanal mit höchster Punktzahl der beste Kanal ist. Falls ein Kanal nicht eine bestimmte Mindestpunktzahl erreicht, erscheint dieser Kanal auch nicht mehr in der Liste.

Anschließend wird der beste Kanal überprüft, ob innerhalb eines zweiten Zeitabschnitts TMRSUP (z. B. 300 ms) irgendeine Organisationskanalmeldung empfangen wird. Fällt diese Prüfung negativ aus, so wird der nächstschlechtere Kanal überprüft, bis diese Prüfung für alle Kanäle der Liste ausgeführt wurde. Ist diese Prüfung positiv, so wählt die bewegliche Funkstation MS diesen Kanal als neuen Organisationskanal CCH aus und meldet sich an oder gegebenenfalls um. Fällt für keinen der Kanäle der Liste diese Prüfung positiv aus, so wird ein großer Suchlauf gestartet.

Das folgende Zahlenbeispiel zeigt die Dauer t eines kleinen Suchlaufes auf. Diese Dauer t ergibt sich gemäß der Gleichung

$$t = (M + 1) \times I \times (t \text{ (Syntheziser) } TCCHTR),$$

wobei unter t (Syntheziser) die Einstellzeit des Synthezisers zu verstehen ist. Mit M = 8, i = 3, t (syntheziser) = 30 ms und TCCHTR = 5 ms ergibt sich t = 0,95 s.

Jede Messung jedes Kanals kann in bestimmten Zeitabständen TSRF (z. B. nach 5 s) wiederholt werden. Weiterhin ist es möglich, die vergebene Punktzahl auch noch vom Rufbereich abhängig zu machen. Beispielsweise erhalten alle Organisationskanäle CCH, die zum gleichen Rufbereich gehören, in welcher sich die bewegliche Funkstation MS eingebucht hat, einen Bonus. Damit kann ein Schutz vor zu häufigen Ummelden der beweglichen Funkstationen MS erzielt werden.

## 2.2 Großer Suchlauf

Die bewegliche Funkstation MS mißt auf allen empfangbaren Übertragungskanälen des Frequenzbandes des Funkübertragungssystems die Qualität. Dabei beginnt die bewegliche Funkstation MS mit dem Übertragungskanal und erhöht jeweils die Frequenz um 25 KHZ bis der Übertragungskanal mit der höchsten Kanalnummer z. B. NCH = 1000 erreicht wird.

Die Qualitätsmessung erfolgt entsprechend zum kleinen Suchlauf. Auch hier ist vorgesehen, daß die bewegliche Funkstation MS jeden Kanal I-mal mißt. Anschließend erfolgt eine Prüfung des besten Kanals. Dabei sind folgende Bedingungen einzuhalten:
- Irgendeine Organisationskanalmeldung muß innerhalb der Zeit TMRSUP empfangbar sein.
- Der Verweis MR muß innerhalb einer Zeit TMRCH (z. B. 5 s) empfangen werden.
- Die im Verweis MR übertragene Kanalnummer (Frequenz) muß mit der am Synthesizer eingestellten Frequenz übereinstimmen.
- Landeskennzahl nat.
- Teilmengenmarkierung atp.

Verläuft diese Prüfung positiv, so wählt die bewegliche Funkstation MS diesen Kanal als neuen Organisationskanal CCH aus.

Das folgende Zahlenbeispiel zeigt die Dauer T eines großen Suchlaufes auf. Diese Dauer T ergibt sich gemäß der Gleichung

$$T = NCH \times I \times (t(\text{Synthesizer}) + TCCHTR).$$ Mit NCH = 1000, I = 3, t (Synthesizer) = 15 ms und TCCHTR = 5 ms ergibt sich T = 60 s.

Im Vergleich zum kleinen Suchlauf ist die t (Synthesizer) kleiner, da immer nur 25 KHz-Schritte gemacht werden.

## 2.3 Ersatzkanal-Prüfung

Die bewegliche Funkstation MS führt nach Erkennen eines Ausfalls eines Organisationskanals CCH folgenden Funktionsablauf durch.
- In der beweglichen Funkstation MS wird die im Verweis SC angegebene Kanalnummer (Frequenz) des Ersatzkanals CCH - SC eingestellt.
- Wird innerhalb der Zeit TMRSUP irgendeine Organisationskanalmeldung empfangen, so wählt die bewegliche Funkstation MS diesen Ersatzkanal CCH - SC als neuen Organisationskanal CCH aus.

In Fig. 1 ist eine Steuereinrichtung in Blockschaltform dargestellt. Die ortsfeste Funkstation BS enthält eine Auswahlschaltung AS, welche mit einer Schalteinrichtung SE verbunden ist. Weiterhin enthält die ortsfeste Funkstation BS eine Anzahl von Speichern, wovon nur einer in der Zeichnung dargestellt und mit Sp 1 bezeichnet ist, in welchen Verweise RF auf Organisationskanälen zugeordneten Kanalnummern cnr abgespeichert sind. Weiter sind in der ortsfesten Funkstation BS Speicher SpM und SpSC angeordnet, welche Verweise MR auf der ortsfesten Funkstation BS zugeordneten Organisationskanäle CCH sowie Verweise SC auf mindestens einen ihr zugeordneten Ersatzkanal CCH - SC speichern. Enthalten die Verweise RF, MR oder SC neben der Kanalnummer cnr zusätzliche Informationen, wie beispielsweise eine Landeskennzahl nat und/oder eine Teilmengenmarkierung atp und/oder eine Rufzonenmarkierung pga so ist der Speicheraufwand größer. Diese zusätzlichen Informationen können jedoch zur Verkürzung der Suchläufe führen. Alle genannten Speicher sind mit der Schalteinrichtung SE verbunden.

Die Schalteinrichtung SE wird durch die Auswahlschaltung AS gesteuert und gibt Nutzsignale N oder Verweise RF, MR oder SC ab, welche einen in der ortsfesten Funkstation BS angeordneten Sender S zugeführt werden.

In der beweglichen Funkstation MS ist ein Empfänger E angeordnet, welcher die durch den Sender S ausgestrahlten Nutzsignale N oder Verweise RF, MR oder SC empfängt und einer Auswerteschaltung AWS zuführt. Die Auswerteschaltung AWS ist mit einer Auswahlschaltung AMS verbunden.

Die Auswahlschaltung AMS steuert eine in der beweglichen Funkstation MS angeordnete Schalteinrichtung SMS an. Die Schalteinrichtung SMS ist verbunden mit einer Speichergruppe, welche die Speicher SPM 1, Smr und Ssc enthält.

In dem Speicher SPM 1 werden die Verweise RF, beispielsweise die Kanalnummern cnr eingelesen, wobei stets eine begrenzte Anzahl von zuletzt eingelesenen Kanalnummern cnr gespeichert sind. In dem Speicher Smr werden die Verweise MR auf der ortsfesten Funkstation BS zugeordneten Organisationskanäle CCH gespeichert und in dem Speicher Ssc werden die Verweise SC auf den der ortsfesten Funkstation BS zugeordneten Ersatzkanälen CCH - SC gespeichert.

## Patentansprüche

1. Verfahren zum Auswählen eines Organisationskanals in einer beweglichen Funkstation eines Funkübertragungssystems mit ortsfesten Funkstationen, welchen mindestens ein Organisationskanal zugeordnet ist, <u>dadurch gekennzeichnet,</u> daß die ortsfeste Funkstation (BS) zu veränderbaren Zeitabständen auf jedem ihr zugeordneten Organisationskanal (CCH) permanent Verweise (RF) auf andere bestehende Organisationskanäle (CCH) sendet, wobei Inhalt eines Verweises (RF) mindestens die dem Organisationskanal (CCH) zugeordnete Kanalnummer (cnr) ist.

2. Verfahren zum Auswählen eines Organisationskanals in einer beweglichen Funkstation eines Funkübertragunssystems mit ortsfesten Funkstationen, welchen mindestens ein Organisationskanal zugeordnet ist, <u>dadurch gekennzeichnet,</u> daß die ortsfeste Funkstation (BS) zu veränderbaren Zeitabständen auf jedem ihr zugeordneten Organisationskanal (CCH) permanent Verweise (MR) auf sich selbst sendet, wobei Inhalt des Verweises (MR) mindestens die Kanalnummer (cnr) dieses Organisationskanals (CCH) ist.

3. Verfahren nach Anspruch 1 und 2, <u>dadurch gekennzeichnet,</u> daß die ortsfeste Funkstation (BS) zu veränderbaren Zeitabständen auf dem Organisationskanal (CCH) einen Verweis (SC) auf einen ihr zugeordneten Ersatzkanal (CCH - SC) sendet, wobei Inhalt des Verweises (SC) mindestens die dem Ersatzkanal zugeordnete Kanalnummer (cnr) ist.

4. Verfahren nach einem der Ansprüche 1 bis 3, <u>dadurch gekennzeichnet,</u> daß die ortsfeste Funkstation (BS) in den Verweisen (RF, SC, MR) eine Landeskennzahl (nat) und/oder eine Teilmengenmarkierung (atp) und/oder eine Rufzonenmarkierung (pga) sendet.

5. Verfahren nach einem der vorhergehenden Ansprüche, <u>dadurch gekennzeichnet,</u> daß Verweise auf andere Organisationskanäle (RF) auf mögliche Ersatzkanäle (SC) und auf sich selbst (MR) in einem festen Raster von Zeitabständen und/oder in zyklischer Aufeinanderfolge gesendet werden.

6. Verfahren nach einem der Ansprüche 1 bis 3, <u>dadurch gekennzeichnet,</u> daß die beweglichen Funkstationen (MS) die Verweise (RF, SC, MP) speichern.

7. Verfahren nach einem der Ansprüche 1 bis 3, <u>dadurch gekennzeichnet,</u> daß jede bewegliche Funkstation (MS) die Verweise (RF, SC, MR) befolgt, in dem diese die Qualität des verwiesenen Organisationskanals (CCH) mißt, diese Qualität mit der Qualität des vorherigen Organisationskanals (CCH) vergleicht und in Abhängigkeit vom Ergebnis des Qualitätsvergleichs auf den vorherigen Organisationskanal (CCH) wechselt oder den verwiesenen Organisationskanal (CCH) beibehält.

8. Verfahren nach Anspruch 1 oder 2, <u>dadurch gekennzeichnet,</u> daß beim Einschalten der beweglichen Funkstation (MS) oder beim Absinken der Qualität einer bestehenden Funkverbindung zwischen ortsfester Funkstation (BS) und beweglicher Funkstation (MS) unter ein Minimum oder bei nicht Übereinstimmung des Inhalts des Verweises (MR) auf sich selber die bewegliche Funkstation (MS) einen Suchlauf nach Organisationskanälen (CCH) beginnt.

9. Verfahren nach Anspruch 3, <u>dadurch gekennzeichnet,</u> daß beim Erkennen eines Ausfalls eines Organisationskanals (CCH) in der beweglichen Funkstation (MS), diese eine Überprüfung des Ersatzkanals (CCH - SC) vornimmt.

10. Verfahren nach Anspruch 3, <u>dadurch gekennzeichnet,</u> daß der Ersatzkanal (CCH - SC) im Normalbetrieb ein der ortsfesten Funkstation (BS) zugeordneter Sprechkanal (TCH), Organisationskanal (CCH) oder ein nicht in Betrieb befindlicher Übertragungskanal ist.

11. Verfahren nach einem der Ansprüche 1 bis 3, <u>dadurch gekennzeichnet,</u> daß in jeder beweglichen Funkstation (MS) ein Netzabbild von Organisationskanälen (CCH) einspeicherbar ist.

12. Verfahren nach Anspruch 1, <u>dadurch gekennzeichnet,</u>

daß Organisationskanäle (CCH) durch eine Markierung (OPC) gekennzeichnet werden und in einem abgegrenzten Bereich des Frequenzbands aller Übertragungskanäle liegen.

13. Verfahren nach Anspruch 1 oder 2,
dadurch gekennzeichnet,
daß jede bewegliche Funkstation (MS) während eines ersten Zeitabschnitts (TCCHTR) die Qualität von verwiesenen Organisationskanälen (CCH) mindestens I-mal mißt, mit einer Punktzahl bewertet, den Mittelwert der I Punktzahlen ermittelt und eine Liste von Mittelwerten derart bewerteter Organisationskanäle (CCH) speichert.

14. Verfahren nach Anspruch 13,
dadurch gekennzeichnet,
daß nach Zuordnung zum am höchsten bewerteten Organisationskanal (CCH) die bewegliche Funkstation (MS) die Liste löscht.

15. Verfahren nach Anspruch 14,
dadurch gekennzeichnet,
daß die bewegliche Funkstation (MS), ausgehend vom am höchsten bewerteten Organisationskanal (CCH), prüft ob über diesen, innerhalb eines zweiten Zeitabschnitts (TMRSUP) eine beliebige Organisationskanal-Meldung übertragen wird.

16. Verfahren nach Anspruch 13,
dadurch gekennzeichnet,
daß in der beweglichen Funkstation (MS) jede Messung in bestimmten Zeitabständen (TSRF) wiederholt wird.

17. Verfahren nach einem der Ansprüche 1 bis 3,
dadurch gekennzeichnet,
daß die beweglichen Funkstationen (MS) Kanalverweise (RF, MR, SC) überprüfen und gegebenenfalls speichern und den Qualitätsvergleich zu einem späteren Zeitpunkt durchführen.

18. Verfahren nach Anspruch 7,
dadurch gekennzeichnet,
daß jede ortsfeste Funkstation nach dem Senden von Kanalverweisen (RF, MR) Rufe mit einer Verzögerung (TD) abstrahlt.

19. Verfahren nach Anspruch 7,
dadurch gekennzeichnet,
daß das Maß der Qualität einer Funkverbindung aus einer Feldstärke- und/oder Jittermessung abgeleitet wird, wobei diese in der beweglichen Funkstation (MS) gemessen und einer Qualitätskategorie eingeordnet werden.

20. Steuereinrichtung zur Durchführung des Verfahrens zum Auswählen eines Organisationskanals in einer beweglichen Funkstation eines Funkübertragungssystems mit ortsfesten Funkstationen, welchen mindestens ein Organisationskanal zugeordnet ist, nach den Ansprüchen 1 oder 2,
dadurch gekennzeichnet,
daß in der ortsfesten Funkstation (BS) eine Auswahlschaltung (AS) angeordnet ist, welche mit einer Schalteinrichtung (SE) verbunden ist, daß in der ortsfesten Funkstation (BS) eine Anzahl von Speichern (z. B. Sp 1) vorgesehen sind, in welchen Verweise (RF) auf Organisationskanälen zugeordneten Kanalnummern (cnr) abgespeichert sind, daß weiterhin Speicher (SpM bzw. SpSC) zur Aufnahme von Verweisen (MR) auf dem der ortsfesten Funkstation (BS) zugeordneten Organisationskanal (CCH) sowie Verweise (SC) auf einen ihr zugeordneten Ersatzkanal (CCH - SC) vorgesehen sind, daß die Schalteinrichtung (SE) gesteuert von der Auswahlschaltung (AS) Nutzsignale (N) oder Verweise (RF) einem in der ortsfesten Funkstation (BS) zugeordneten Sender (S) zuführt, daß in der beweglichen Funkstation (MS) ein Empfänger (E) angeordnet ist, welcher die Nutzsignale (N) oder Verweise (z. B. RF) empfängt und einer Auswerteschaltung (AWS) zuführt, daß die Auswerteschaltung (AWS) mit einer Auswahlschaltung (AMS) eine in der beweglichen Funkstation (MS) angeordnete Schalteinrichtung (SMS) ansteuert und daß die Schalteinrichtung (SMS) gesteuert von der Auswahlschaltung (AMS) eine Speichergruppe (SPM 1) ansteuert, in welchen die Kanalnummern (cnr) eingelesen werden, wobei stets eine begrenzte Anzahl von zuletzt eingelesenen Kanalnummern (cnr) gespeichert sind, sowie weitere Speicher (Smr, Ssc), in welchen Verweise (MR) auf der ortsfesten Funkstation (BS) zugeordneten Organisationskanal (CCH) und Verweise (SC) auf dem der ortfesten Funkstation (BS) zugeordneten Ersatzkanal (CCH - SC) gespeichert werden.

**Claims**

1. A process for selecting a control channel in a mobile radio station of a radio transmission system with base radio stations to which at least one control channel is allocated, wherein on each control channel (CCH) allocated to the base radio station the base radio station (BS) at variable time intervals constantly transmits references (RF) to other existing control channels (CCH), the contents of the references (RF) being at least the channel number (cnr) allocated to the control channel (CCH).

2. A process for selecting a control channel in a mobile radio station of a radio transmission system with base radio stations, to which at least one control channel is allocated, wherein on each control channel (CCH) allocated to the base radio station the base radio station (BS) at variable time intervals constantly transmits references (MR) to itself, the contents of the references (MR) being at least the channel number (cnr) of this control channel (CCH).

3. A process as in claims 1 and 2, wherein the base radio station (BS) at variable time intervals transmits a reference (SC) on the control channel (CCH) to a substitute channel (CCH - SC) allocated to it, the contents of the reference (SC) being at least the channel number (cnr) allocated to the substitute channel.

4. A process as in one of the claims 1 to 3, wherein the base radio station (BS) transmits a destination code (nat) and/or a group code (atp) and/or a paging area code (pga) in the references (RF, SC, MR).

5. A process as in one of the previous claims wherein references to other control channels (RF), to possible substitute channels (SC) and to itself (MR) are transmitted in a fixed pattern of time intervals and/or in cyclical succession.

6. A process as in one of the claims 1 to 3, wherein the mobile radio stations (MS) store the references (RF, SC, MR).

7. A process as in one of the claims 1 to 3, wherein each mobile radio station (MS) responds to the references (RF, SC, MR) by measuring the quality of the control channel (CCH) to which reference is made, comparing this quality with the quality of the previous control channel (CCH) and depending on the result of the quality comparison reverting to the previous control channel (CCH) or staying with the control channel (CCH) to which reference is made.

8. A process as in claim 1 or 2, wherein the mobile radio station (MS) initiates a search for control channels (CCH) when it switches on or if the quality of an existing radio connection between the base radio station (RS) and the mobile radio station (MS) falls below a minimum or if the contents of the reference (MR) to itself does not correspond.

9. A process as in claim 3, wherein the mobile radio station (MS) runs a check on the substitute channel (CCH - SC) when it identifies a control channel (CCH) failure.

10. A process as in claim 3, wherein the substitute channel (CCH - SC) in normal operation is a traffic channel (TCH), a control channel (CCH) or a transmission channel not in operation allocated to the base radio station (BC).

11. A process as in one of the claims 1 to 3, wherein a state of the network of control channels (CCH) can be stored in each mobile radio station (MS).

12. A process as in claim 1, wherein control channels (CCH) are identified by a code (OPC) and lie in a delimited range of the frequency band of all the transmission channels.

13. A process as in claim 1 or 2, wherein each mobile radio station (MS) measures the quality of control channels (CCH) to which reference is made at least I times during a first time period (TCCHTR), awards to each such channel a number of quality points, derives the mean value of the I number of these points, and stores a list of such mean values for the measured control channels (CCH).

14. A process as in claim 13, wherein the mobile radio station (MS) is allocated to the control channel (CCH) with the highest number of quality points and after such allocation erases the list.

15. A process as in claim 14, wherein the mobile radio station (MS), beginning with the control channel (CCH) with the highest rating, determines whether any control channel message is transmitted on this channel during a second time period (TMRSUP).

16. A process as in claim 13, wherein each measurement by the mobile radio station (MS) is repeated at predetermined intervals of time (TSRF).

17. A process as in one of the claims 1 to 3, wherein the mobile radio stations (MS) check channel references (RF, MR, SC) and store them as appropriate and carry out the quality comparison at a later stage.

18. A process as in claim 7, wherein each base radio station, after transmitting channel references (RF, MR) emits calls with a delay (TD).

19. A process as in claim 7, wherein the quality of radio connection is derived from a measurement of the field strength and/or jitter, this being measured in the mobile radio station (MS) and being assigned a quality category.

20. A control device for practising the process for selecting a control channel in a mobile radio station of a radio transmission system with base radio stations to which at least one control channel is allocated, as in claim 1 or 2, wherein a selection circuit (AS), which is connected to a switching device (SE) is arranged in the base radio station (BS), wherein in the base radio station (BS) a number of memories (e.g. Sp 1) are provided, in which references (RF) to channel numbers (cnr) allocated to control channels are stored, wherein further memories (SpM and SpSC respectively) are provided for storing references (MR) to the control channel (CCH) allocated to the base radio station (BS) as well as references (SC) to a substitute channel (CCH - SC) allocated to this base station, wherein the switching device (SE), controlled by the selection circuit (AS), applies communication signals (N) or references (RF) to a transmitter (S) arranged in the base radio station (BS), wherein in the mobile radio station (MS) a receiver (E) is arranged, which receives the communication signals (N) or references (e.g. RF) and applies them to an evaluation circuit (AWS), wherein the evaluation circuit (AWS) with a selection circuit (AMS) triggers a switching device (SMS) arranged in the mobile radio station (MS) and wherein the switching device (SMS) controlled by the selection circuit (AMS) triggers a set of memories (SPM 1) into which the channel numbers (cnr) are read, while always a limited number of channel numbers (cnr) read most recently are stored, and also further memories (Smr, Ssc), in which the references (MR) to the control channel (CCH) allocated to the base radio station (BS) and the references (SC) to the substitute channel (CCH - SC) allocated to the base radio station (BS) are stored.

## Revendications

1. Procédé pour la sélection d'un canal d'organisation dans un poste de radio mobile d'un système de radiocommunications comportant des postes de radio fixes, auxquels au moins un canal d'organisation est attribué, caractérisé en ce que le poste de radio fixe (BS) émet, à des intervalles variables sur chaque canal d'organisation (CCH) qui lui est attribué, en permanence des renvois (RF) vers d'autres canaux d'organisation (CCH) existants, un renvoi (RF) contenant au moins le numéro de canal (cnr) attribué au canal d'organisation (CCH).

2. Procédé pour la sélection d'un canal d'organisation dans un poste de radio mobile d'un système de radiocommunications comportant des postes de radio fixes auxquels est attribué au moins un canal d'organisation, caractérisé en ce que le poste de radio fixe (BS) émet, à des intervalles variables sur chaque canal d'organisation (CCH) qui lui est attribué, en permanence des renvois (MR) vers lui-même, le renvoi (MR) contenant au moins le numéro de canal (cnr) de ce canal d'organisation (CCH).

3. Procédé suivant les revendications 1 et 2, caractérisé en ce que le poste de radio fixe (BS) émet, à des intervalles variables sur le canal d'organisation (CCH), un renvoi (SC) vers un canal de remplacement (CCH - SC) qui lui est attribué, le renvoi (SC) contenant au moins le numéro de canal (cnr) attribué au canal de remplacement qui lui est attribué.

4. Procédé suivant l'une quelconque des revendications 1 à 3, caractérisé en ce que le poste de radio fixe (BS) émet, dans les renvois (RF, SC, MR), un préfixe de pays (nat) et/ou un marquage de quantité partielle (atp) et/ou un marquage de zone d'appels (pga).

5. Procédé suivant l'une quelconque des revendications précédentes, caractérisé en ce que les renvois vers d'autres canaux d'organisation (RF), vers des canaux de remplacement (SC) possibles et vers lui-même (MR) sont émis dans une grille fixe d'intervalles et/ou en succession cyclique.

6. Procédé suivant l'une quelconque des revendications à 3, caractérisé en ce que les postes de radio mobiles (MS) stockent les renvois (RF, SC, MR).

7. Procédé suivant l'une quelconque des revendications 1 à 3, caractérisé en ce que chaque poste de radio mobile (MS) tient compte des renvois (RF, SC, MR), par le fait qu'il mesure la qualité du canal d'organisation (CCH) indiqué, compare cette qualité à la qualité du canal d'organisation (CCH) précédent et, en fonction du résultat de la comparaison de qualités, commute sur le canal d'organisation (CCH) précédent ou conserve le canal d'organisation (CCH) indiqué.

8. Procédé suivant la revendication ou 2, caractérisé en ce que, lors de l'enclenchement du poste de radio mobile (MS) ou lors d'une chute en dessous d'un minimum de la qualité d'une liaison radio existant entre le poste de radio fixe (BS) et le poste de radio mobile (MS) ou dans le cas d'une non-concordance du contenu du renvoi (MR) vers lui-même, le poste de radio mobile (MS) lance une opération de recherche de canaux d'organisation (CCH).

9. Procédé suivant la revendication 3, caractérisé en ce que, lors de la reconnaissance d'une défaillance d'un canal d'organisation (CCH) dans le poste de radio mobile (MS) celui-ci entreprend une exploration du canal de remplacement (CCH - SC).

10. Procédé suivant la revendication 3, caractérisé en ce que le canal de remplacement (CCH - SC), en service normal, est un canal de conversation (TCH), ou un canal d'organisation (CCH) attribué au poste de radio fixe (BS) ou un canal de transmission qui n'est pas en service.

11. Procédé suivant l'une quelconque des revendications 1 à 3, caractérisé en ce que, dans chaque poste de radio mobile (MS), peut être stockée une réplique de réseau de canaux d'organisation (CCH).

12. Procédé suivant la revendication 1, caractérisé en ce que des canaux d'organisation (CCH) sont caractérisés par un marquage (OPC) et sont situés dans un domaine limité de la bande de fréquences de tous les canaux de transmission.

13. Procédé suivant la revendication ou 2, caractérisé en ce que, pendant une première période (TCCHTR), chaque poste de radio mobile (MS) mesure au moins I fois la qualité de canaux d'organisation (CCH) indiqués, leur attribue un nombre de points, détermine la valeur moyenne des I nombres de points et stocke une liste de valeurs moyennes de canaux d'organisation (CCH) ainsi évalués.

14. Procédé suivant la revendication 13, caractérisé en ce qu'après association au canal d'organisation (CCH) auquel est attribué la note la plus haute, le poste de radio mobile (MS) efface la liste.

15. Procédé suivant la revendication 14, caractérisé en ce qu'en commençant par le canal d'organisation (CCH) auquel a été attribuée la note la plus haute, le poste de radio mobile (MS) vérifie si, dans une seconde période (TMRSUP), un message de canal d'organisation quelconque a été transmis sur celui-ci.

16. Procédé suivant la revendication 13, caractérisé en ce que, dans le poste de radio mobile (MS), chaque mesure est répétée à des intervalles (TSRF) déterminés.

17. Procédé suivant l'une quelconque des revendications 1 à 3, caractérisé en ce que les postes de radio mobiles (MS) vérifient les renvois (RF, MR, SC) vers des canaux et, le cas échéant, les stockent et effectuent la comparaison de qualités à un moment ultérieur.

18. Procédé suivant la revendication 7, caractérisé en ce qu'après l'émission de renvois (RF, MR) vers des canaux, chaque poste de radio fixe émet des appels avec un retard (TD) 19. Procédé suivant la revendication 7,

caractérisé en ce que la mesure de la qualité d'une liaison radio est obtenue par une mesure d'intensité de champ et/ou une mesure d'instabilité, ces grandeurs étant mesurées et associées à une catégorie de qualité dans le poste de radio mobile (MS).

20. Dispositif de commande pour l'exécution du procédé de sélection d'un canal d'organisation dans un poste de radio mobile d'un système de radiocommunications comportant des postes de radio fixes auxquels au moins un canal d'organisation est attribué suivant la revendication 1 ou 2, caractérisé en ce que, dans le poste de radio fixe (BS), est installé un circuit de sélection qui est connecté à un dispositif de commutation (SE), que, dans le poste de radio fixe (BS), sont prévues plusieurs mémoires (par exemple Sp 1), dans lesquelles sont stockés des renvois (RF) vers des numéros de canaux (cnr) attribués à des canaux d'organisation, qu'en outre, des mémoires (SpM ou SpSC) sont prévues pour l'enregistrement de renvois (MR) vers le canal d'organisation (CCH) attribué au poste de radio fixe (BS), ainsi que de renvois (SC) vers un canal de remplacement (CCH - SC) qui lui est attribué, que le dispositif de commutation (SE), commandé par le circuit de sélection (AS), fournit des signaux utiles (N) ou des renvois (RF) à un émetteur associé dans le poste de radio fixe (BS), que, dans le poste de radio mobile (MS), est installé un récepteur (E) qui reçoit les signaux utiles (N) ou les renvois (RF) par exemple, et les applique à un circuit d'évaluation (AWS), que le circuit d'évaluation (AWS) active, par un circuit de sélection (AMS), un dispositif de commutation (SMS) installé dans le poste de radio mobile (MS) et que, le dispositif de commutation (SMS), commandé par le circuit de sélection (AMS), active un groupe de stockage (SPM 1) dans lequel les numéros de canaux (cnr) sont enregistrés, un nombre limité de numéros de canaux (cnr) introduits en dernier lieu étant toujours stockés, ainsi que d'autres mémoires (Smr, Ssc), dans lesquelles sont stockés des renvois (MR) vers le canal d'organisation (CCH) attribué au poste de radio fixe (BS) et des renvois (SC) vers le canal de remplacement (CCH - SC) attribué au poste de radio fixe (BS).

EP 0 111 972 B1

1